# EUROPÄISCHE PATENTSCHRIFT

(11) **EP 2 087 565 B1**
(45) Veröffentlichungstag und Bekanntmachung des Hinweises auf die Patenterteilung: **18.02.2015**
(21) Anmeldenummer: 07821550.6
(22) Anmeldetag: 19.10.2007
(51) Int. Cl.: H02B 1/50

(54) **VERTEILERSCHRANK MIT ZWEITEILLIGER INNENKORPUS**
TWO-PIECE INNER BODY IN A DISTRIBUTION CUPBOARD
CORPS INTÉRIEUR EN DEUX PARTIES DANS UN ARMOIRE DE DISTRIBUTION

(30) Priorität: 19.10.2006 DE 102006049371; 22.11.2006 DE 102006055137
(43) Veröffentlichungstag der Anmeldung: 12.08.2009
(73) Patentinhaber: Berthold Sichert GmbH, 12277 Berlin (DE)
(72) Erfinder: PERSCHON, Helmut, 12305 Berlin (DE); IRMER, Günter, 13055 Berlin (DE)
(74) Vertreter: Alber, Norbert
(86) Internationale Anmeldenummer: PCT/EP2007/061186
(87) Internationale Veröffentlichungsnummer: WO 2008/046903

(56) Entgegenhaltungen:
- EP-A- 1 458 073
- DE-U1- 20 101 558
- US-A1- 2002 140 325
- US-A1- 2002 166 831
- US-A1- 2006 220 506

## Beschreibung

### I. Anwendungsgebiet

Die Erfindung betrifft einen Verteilerschrank, der in der Regel im Freien aufgestellt ist und die technischen, z. B. elektrischen oder optischen, Verteilanlagen für z. B. Schwachstromsysteme, beispielsweise Telefonanlagen, mit zugehörigen Stromversorgungseinrichtungen und Kabelab-/-anschlusseinrichtungen für ein bestimmtes räumliches Gebiet aufnimmt.

### II. Technischer Hintergrund

Derartige Verteilerschränke müssen - neben einer ausreichenden baulichen Stabilität und einer ausreichenden IP-Sicherheit, also Dichtigkeit gegen Regen und Spritzwasser, sowie einer Widerstandsfähigkeit gegen Vandalismus etc. - heute weitere Forderungen erfüllen, beispielsweise dürfen keine zu starken elektromagnetischen Strahlungen an die Umgebung abgegeben werden, und für den Einsatz vor allem in wärmeren Ländern dürfen die Temperaturen im Inneren des Verteilerschrankes nicht zu hoch ansteigen trotz der dort untergebrachten, wärmeabgebenden elektrischen Baugruppen, aber auch nicht zu tief absinken.

Derartige Verteilerschränke werden grundsätzlich entweder aus Metall oder aus Kunststoff hergestellt, wobei Kunststoff den Vorteil einer billigeren Herstellbarkeit mit dem Vorteil eines elektrisch nicht leitenden Materials verbindet, so dass selbst bei außerplanmäßigen Kontaktierungen des Gehäuses des Verteilerschrankes durch ein elektrisches Bauelement nie die Gefahr besteht, dass bei Berühren des Gehäuses von außen die betreffende Person einen Stromschlag erhält.

Seit in Deutschland und auch in anderen Ländern das Monopol der staatlichen Telekommunikationsunternehmen aufgehoben ist, und unterschiedliche Betreiber von Netzen wie etwa Telekommunikationsnetzen vorhanden sind, besteht weiterhin das Problem für die Hersteller solcher Verteilerschränke darin, dass die verschiedenen Netzbetreiber unterschiedliche Anforderungen an diese Verteilerschränke zwingend vorgeben, beispielsweise hinsichtlich Abmessungen der Verteilerschränke, Beplankung des Innenkorpus, Befestigungsposition und Form des Montagerahmens im Inneren des Innenkorpus, Belüftungsmöglichkeit etc..

Für die Hersteller der Verteilerschränke ergibt sich daraus das Problem, dass eine sehr große unterschiedliche Anzahl von Varianten an Verteilerschränken entwickelt und bevorratet werden muss, was unter anderem den Lageraufwand sowie Aufwand für Formen und Vorrichtung drastisch erhöht.

Dieser erhöhte Aufwand für die Lagerhaltung umfasst auch die Lagerhaltung für den Reparaturfall, indem hierfür nicht nur Teile des Außenkorpus vorrätig gehalten werden müssen, sondern auch Teile oder auch ganze Innenkorpusse, die bei Kollisionen mit Kraftfahrzeugen häufig ebenfalls beschädigt werden.

Dabei besteht das zusätzliche Problem darin, dass bei Beschädigungen am Innenkorpus diese meist nur behoben werden können, indem die in dem Innenkorpus und dessen Montage-Gestell vorhandenen Einbauten abgeschaltet werden, d. h. der Verteilerschrank insgesamt deaktiviert wird, da das Montage-Gestell am Innenkorpus befestigt ist und die Gefahr eines Kurzschlusses oder Stromschlages dadurch zu groß wird.

Ein weiteres Problem neben der Reparatur ist die seitliche Erweiterung von Verteilerschränken, die zum einen eine feste fluchtende seitliche Verbindung der beiden Verteilerschränke ermöglichen soll und andererseits möglichst schnell vonstatten gehen soll, wie auch bei Reparaturen.

Deshalb soll bevorzugt auf den Bau eines Sockels unter dem anzureihenden Korpus wenn möglich verzichtet werden.

Das Dokument EP 1 458 073 offenbart einen Verteilerschrank gemäss dem Oberbegriff des Anspruchs 1.

### III. Darstellung der Erfindung

### a) Technische Aufgabe

Es ist daher die Aufgabe den Verteilerschrank und insbesondere dessen Korpus so zu gestalten, dass Folgearbeiten möglichst schnell und möglichst ohne Deaktivieren des Verteilerschrankes möglich sind, insbesondere Reparaturen bei Beschädigungen des Verteilerschrankes, und ein entsprechendes Verfahren zu Verfügung zu stellen.

### b) Lösung der Aufgabe

Diese Aufgabe wird durch die Merkmale der Ansprüche 1 und 10 gelöst. Vorteilhafte Ausführungsformen ergeben sich aus den Unteransprüchen.

Durch die Unterteilung des Korpusrahmens in einen unteren und oberen Teil, die auch nachträglich leicht und schnell voneinander entfernbar sind, sowie die Befestigung des die elektrischen Einbauten tragenden Montage-Gestells am unteren der beiden Korpusrahmen, vorzugsweise jedoch nicht auch am oberen Korpusrahmen, kann der obere Korpusrahmen nach dem Lösen der Befestigung vom unteren Korpusrahmen abgezogen werden.

Dies hat den Vorteil, dass bei Beschädigungen z. B. durch angefahrene Kraftfahrzeuge, die nur den oberen Korpusrahmen betreffen - und dies ist bei leichten Anfahrunfällen häufig der Fall - die Reparatur sehr schnell und vor allem ohne Abschalten der Einbauten im Verteilerschrank, d. h. ohne Betriebsunterbrechung des Verteilerschrankes, möglich ist, indem zunächst die gesamte äußere Beplankung oder nur die beschädigten Teile vom oberen Korpusrahmen entfernt werden und dieser dann nach Lösen der Verbindung zum unteren Korpusrahmen vom unteren Korpusrahmen entfernt wird.

Anschließend wird ein neuer oberer Korpusrahmen auf dem unteren Korpusrahmen aufgesetzt und mit dem Außenkorpus, in der Regel einer Beplankung, versehen oder es wird der beschädigte obere Korpusrahmen repariert, z. B. die Einzelteile, aus denen der obere Korpusrahmen besteht und die beschädigt sind, ausgetauscht, etwa einzelne Rahmenprofile. Danach kann auch dieser wieder in Stand gesetzte obere Korpusrahmen wieder aufgesetzt und beplankt werden.

Dabei erstreckt sich in der Regel das Montage-Gestell vom unteren Korpusrahmen aus in den oberen Korpusrahmen hinein und vorzugsweise bis an oder nahe an das obere Ende des Korpusrahmens, wobei das Montage-Gestell meist nahe der Hinterkante des unteren Korpusrahmens von diesem aufragt.

Der untere Korpusrahmen umfasst dabei in der Regel weniger als 25% der gesamten Höhe des Korpusrahmens, insbesondere sogar weniger als 20%, wodurch allein bereits die Wahrscheinlichkeit einer Beschädigung nur des oberen Korpusrahmens relativ groß ist.

Der obere Korpusrahmen hat nach unten eine offene Grundfläche, so dass er über das bestückte Montage-Gestell von oben übergestülpt werden kann und mit dem unteren Korpusrahmen verbunden werden kann, was vorzugsweise nur durch Querbolzen, die einsteckbar und gegebenenfalls verriegelbar sind, erfolgt.

Dadurch wird eine Fixierung der beiden Rahmen gegeneinander in der Vertikalrichtung erreicht.

Damit der obere Korpusrahmen nach dem Lösen vom unteren Korpusrahmen nicht über die gesamte Höhe des Montagegestells hochgehoben werden muss - was vor allem manuell ganz erheblichen Kraftaufwand bedeutet - kann vorzugsweise zunächst die vorderste unterste Querstrebe des oberen Korpusrahmens entfernt werden, sodass dann an der Vorderseite nur noch entlang der Oberkante eine Querstrebe vorhanden ist. Vorzugsweise ist also beim oberen Korpusrahmen wenigstens die vordere unterste Horizontalstrebe einzeln demontierbar und austauschbar, ohne den Rest des oberen Korpusrahmens zu demontieren, wobei weiter vorzugsweise jede Strebe des oberen Korpusrahmens einzeln zu demontieren ist, ohne den Rest zu demontieren.

Dadurch ist es ausreichend, anschließend den oberen Korpusrahmen nur soweit hochzuheben, bis er vertikal außer Eingriff aus seinen Führungen am unteren Korpusrahmen gerät, und dann den oberen Korpusrahmen nach hinten zu bewegen und dadurch vom Rest des Verteilerschrankes, also dem bestückten Montagegestell und dem unteren Montagerahmen, abzuziehen.

In den beiden horizontalen Richtungen erfolgt eine formschlüssige Verbindung, indem der obere Korpusrahmen frei nach unten vorstehende Rahmenprofile aufweist, beispielsweise einen quaderförmigen Rahmen mit entlang der Kanten verlaufenden Rahmenprofilen, wobei die vertikalen Profile über die unteren Ecken nach unten vorstehen und diese freien Enden der vertikalen Profile seitlich neben den Seiten des unteren Korpusrahmens nach unten verlaufen, und zwar vorzugsweise in dort ausgebildete Führungen, die diese freien Enden in beide Horizontalrichtungen formschlüssig fixieren. Der obere Korpusrahmen umfasst also vertikale Streben, die im übergestülpten Zustand seitlich neben dem unteren Korpusrahmen verlaufen und mit dessen Vertikalstreben verbunden sind.

Zu diesem Zweck sind zumindest die vertikalen Kanten des quaderförmigen unteren Korpusrahmens nicht aus den gleichen Korpusprofilen gebildet wie der Rest des Rahmens oder zumindest nicht nur aus diesen Korpusprofilen, sondern durch als Führungen ausgeformte Blechteile ergänzt oder ersetzt.

Vorzugsweise bestehen die Seitenteile des unteren Korpusrahmens aus einem in der Seitenansicht U-förmigen oder rahmenförmigen Blechteil, dessen nach oben frei endende vertikale Schenkel zu einer Führung gebogen sind, in die die freien Enden des oberen Korpusrahmens einsteckbar und dort fixierbar sind, wobei der Querschenkel meist unten auf dem Sockel aufsitzt und auch mit diesem fest verbunden sein kann.

Die Fixierung des oberen Korpusrahmens gegenüber dem unteren erfolgt durch Einstecken von Verriegelungsstangen, wobei die gleichen Stangen benutzt werden können, die bei den Türen des Korpus als Scharnierachsen dienen, indem eine solche Stange auf die Tiefe des Schrankes abgelenkt und von vorne bis hinten durchgeschoben wird, und sich dabei sowohl durch Öffnungen im oberen als auch im unteren Korpusrahmen hindurch erstreckt.

Die Öffnungen im unteren Korpusrahmen sind dabei in den Außenhaltern vorhanden, die im unteren Bereich der Vertikalstreben des oberen Korpusrahmens ohnehin zum Fixieren der äußeren Beplankung angesetzt sind. Die Durchgangsöffnungen im unteren Korpusrahmen sind damit fluchtend in den entsprechenden Schenkeln der Führungen für den oberen Korpusrahmen, insbesondere in den Seitenrahmen, ausgebildet.

Dies ergibt einerseits keinen zusätzlichen Materialverbrauch durch zusätzliche Anbringung von Führungen an den vertikalen, üblichen Rahmenprofilen und vor allem kann dieses U-förmige Seitenteil nach Lösen der Verbindung mit dem restlichen Profilrahmen auch im bestückten Zustand des Verteilerschrankes nach Abnehmen der Außenbeplankung und gegebenenfalls Anheben des oberen Korpusrahmens entfernt werden, beispielsweise durch Herausziehen nach schräg unten, sofern inzwischen das Montage-Gestell mit den Einbauten provisorisch abgestützt wird, bis ein neues Seitenteil montiert und fixiert ist.

In gleicher Weise lassen sich auch einzelne Rahmenprofile des unteren Korpusrahmens aus dem Verteilerschrank ersetzen, bei dem die entsprechenden Teile der Beplankung entfernt wurden, falls eine Beschädigung auch den unteren Korpusrahmen betroffen haben sollte.

Insbesondere kann auch der gesamte untere Korpusrahmen ersetzt werden, und zwar vorzugsweise ohne die Einbauten am Montagegestell zu deaktivieren oder gar zu demontieren.

Da der untere Montagerahmen jedoch das Montagegestell trägt, welches in der Regel aus mehreren nebeneinander stehenden und mindestens im oberen Bereich gegeneinander versteiften Montagepanelen besteht, müssen während der Zeit des Ersetzens des unteren Korpusrahmens das Montagegestell oder die einzelnen Montagepaneele stabilisiert werden.

Da dies im unteren Bereich provisorisch durch Abstützung die Demontage und Neumontage des unteren Korpusrahmens behindern würde, wird erfindungsgemäß vorgeschlagen, dass die einzelnen Montagepaneele oder das gesamte Montagegestell, die zu diesem Zweck natürlich ausreichend eigenstabil auch im bestückten Zustand ausgeführt sein müssen, im oberen Bereich Aufhängepunkte besitzen und an einem provisorisch über dem Schaltschrank errichteten Montagejoch aufgehängt werden, bis der untere Montagerahmen oder dessen beschädigte Teile ausgewechselt sind.

Ist die Beschädigung so stark, dass ohnehin auch die Einbauten beschädigt oder zerstört sind, so müssen diese ohnehin demontiert werden.

Dadurch, dass die freien Enden der Vertikalstreben des oberen Korpusrahmens über vorzugsweise die gesamte Länge der Vertikalstreben des unteren Korpusrahmens neben diesen verlaufen, werden sie auf der ganzen Länge formschlüssig gegeneinander gehalten, was eine hohe mechanische Verbindungssteifigkeit und Belastbarkeit, trotz des einfachen Einsteckens und Verriegelns in die Führungen des unteren Korpusrahmens, ergibt.

Dabei steht der untere Korpusrahmen wie bei den meisten Verteilerschränken auf einem Sockel, der wiederum aus einem Sockelkasten und einem Sockelfuß besteht, die dem Korpusrahmen die notwendige Standsicherheit geben.

Wenn der entsprechende Verteilerschrank eine EMV-Abdichtung benötigt, werden Schirmbleche am oberen Korpusrahmen, insbesondere an dessen Außenseiten, befestigt, jedoch nur bis zu den unteren Horizontalprofilen herab, und nur in Ausnahmenfällen bis zu den unteren freien Enden der Vertikalprofile. Vorzugsweise umfasst der Außenkorpus wenigstens eine Tür, die am oberen Korpusrahmen angelenkt ist und sich vorzugsweise nur über den Höhenbereich zwischen den oberen und unteren Horizontalstreben des oberen Korpusrahmens erstreckt.

Die Einzelteile der Korpusrahmen, vorzugsweise sowohl des unteren als auch des oberen Korpusrahmens, werden über die gleichen Verbindungselemente, vorzugsweise Würfel-Verbinder in den Außenecken, lösbar miteinander verbunden, die so gestaltet sind, dass Profilstäbe zwischen zwei solchen Verbindungselementen gelöst und ausgetauscht werden können, beispielsweise ohne die angrenzende Schirmbleche vorab entfernen zu müssen.

Dadurch wird ein Bausatz geschaffen, der für das zur Verfügungstellen von zweiteiligen Korpusrahmen folgende Teile umfasst:
- Rahmenprofile,
- Würfelverbinder,
- Klemmsteine für die hinterschnittenen Nuten der Rahmenprofile für die Direktverbindung von Rahmenprofilen gegeneinander,
- Führungen zur Verwendung am unteren Profilrahmen für den oberen Profilrahmen, insbesondere in Form von kompletten Seitenteilen für den unteren Profilrahmen,
- Befestigungselemente, insbesondere verriegelbare Steckbolzen, zum Verbinden des oberen Profilrahmens mit dem unteren Profilrahmen.

### c) Ausführungsbeispiele

Ausführungsformen gemäß der Erfindung sind im Folgenden beispielhaft näher beschrieben. Es zeigen:
- Fig. 1:: Einen Verteilerschrank auf einem Sockel ohne Außenbeplankung und ohne Einbauten,
- Fig. 2:: den Verteilerschrank der Figur 1 mit etwas angehobenem oberem Korpusrahmen,
- Fig. 3:: den Verteilerschrank mit fast vollständig abgezogenem oberem Korpusrahmen,
- Fig. 4:: den Verteilerschrank ohne oberen Korpusrahmen.

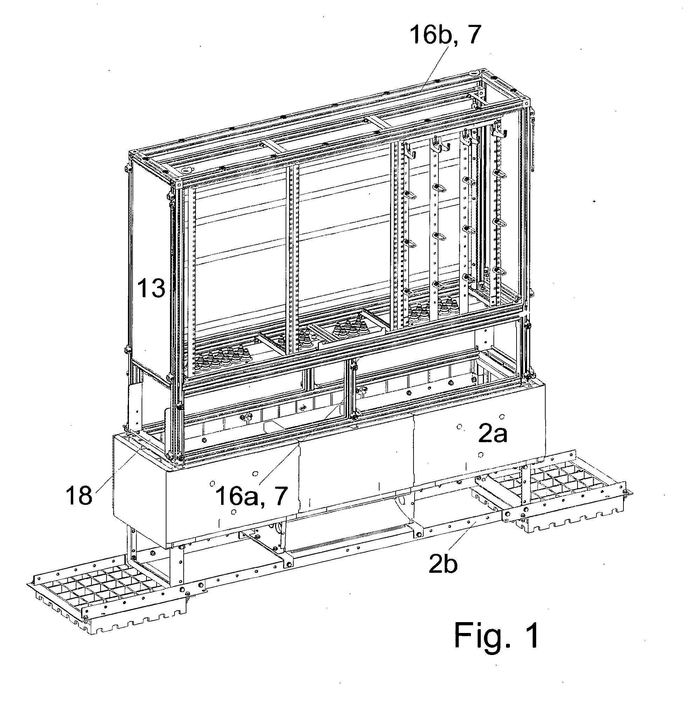

Die Figur 1 zeigt einen erfindungsgemäßen Verteilerschrank, jedoch ohne den Außenkorpus in Form einer Beplankung und ohne Einbauten, die normalerweise im Inneren des Innenkorpus 21 und dort insbesondere an dem Montage-Gestell 6 vorhanden und mit dem aus dem Untergrund herangeführten nicht sichtbaren Kabeln verbunden sind.

Der Innenkorpus 21 ist ein Rahmen, bestehend aus Rahmenprofilen 7, die entlang sowohl der Außenkanten des aufrechtstehenden, quaderförmigen Innenkorpus 21 verlaufen und darüber hinaus auch weitere horizontale und vertikale Verstrebungen dazwischen aufweist.

Der gesamte Innenkorpus 21 ruht auf einem Sockel 2, bestehend aus einem Sockelfuß aus einer Metallkonstruktion, die teilweise im Untergrund eingegraben ist, und einem oberhalb der Erdgleiche den Sockel außen umgebenden Sockelkasten 2a, der in der Regel aus Kunststoff besteht.

Der Innenkorpus 21, der beim Stand der Technik als Einheit auf den Sockel 2 aufgesetzt und mit diesem fest verbunden ist, besteht im Stand der Technik und auch hier aus einem Korpusrahmen 16 mit Rahmenprofilen 7 entlang zumindest der Außenkanten des aufrechtstehenden quaderförmigen Innenkorpus 21, dessen Flächen bei Bedarf mit Schirmblechen 13 beplankt und verschlossen sind, um die EMV-Dichtigkeit des Gehäuses herzustellen.

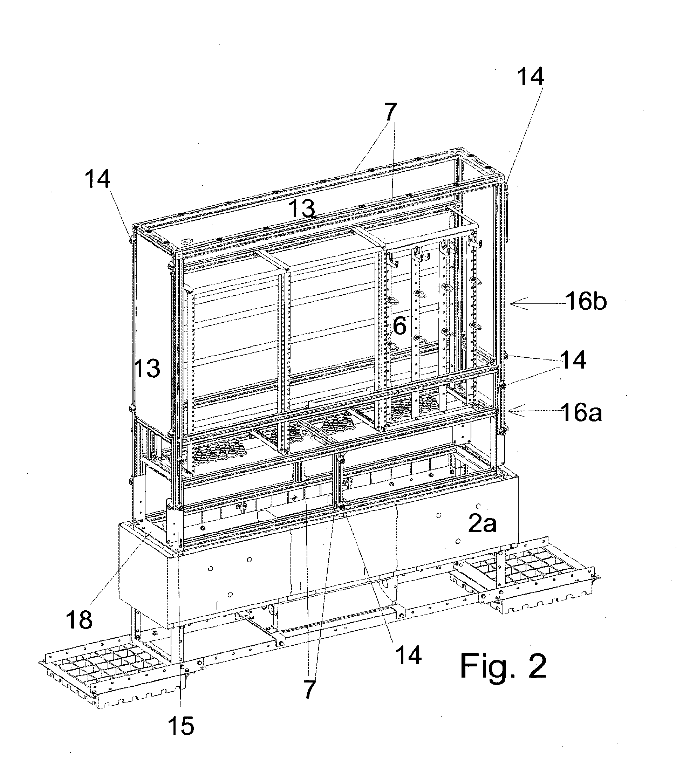

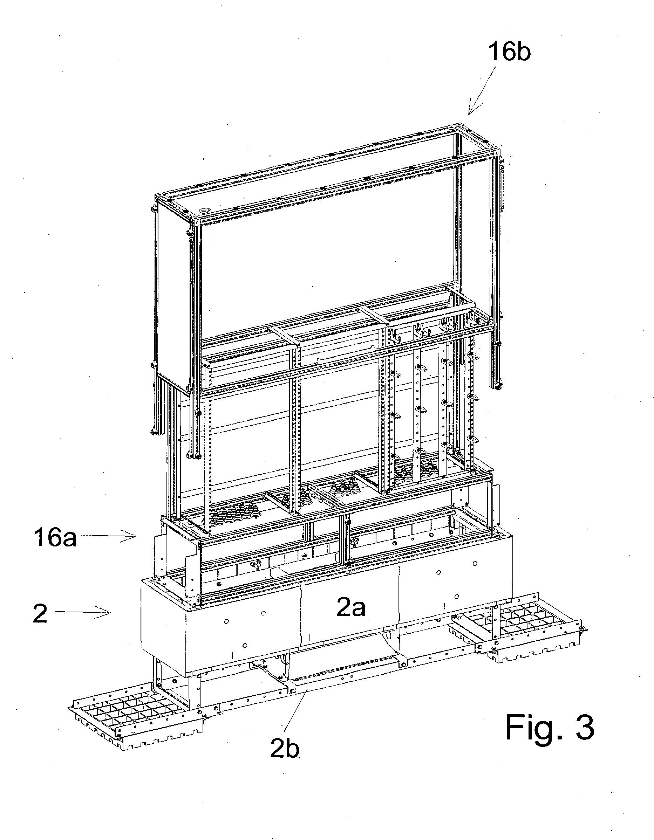

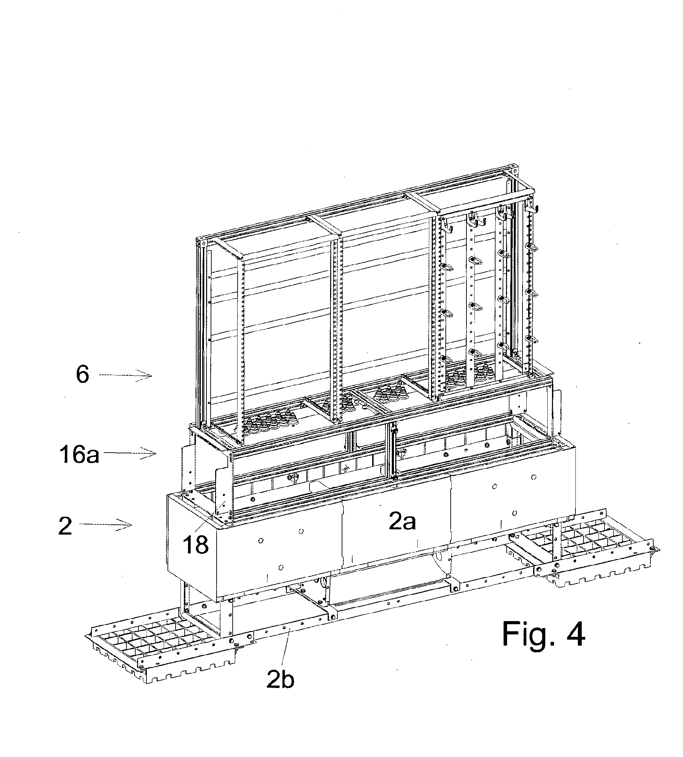

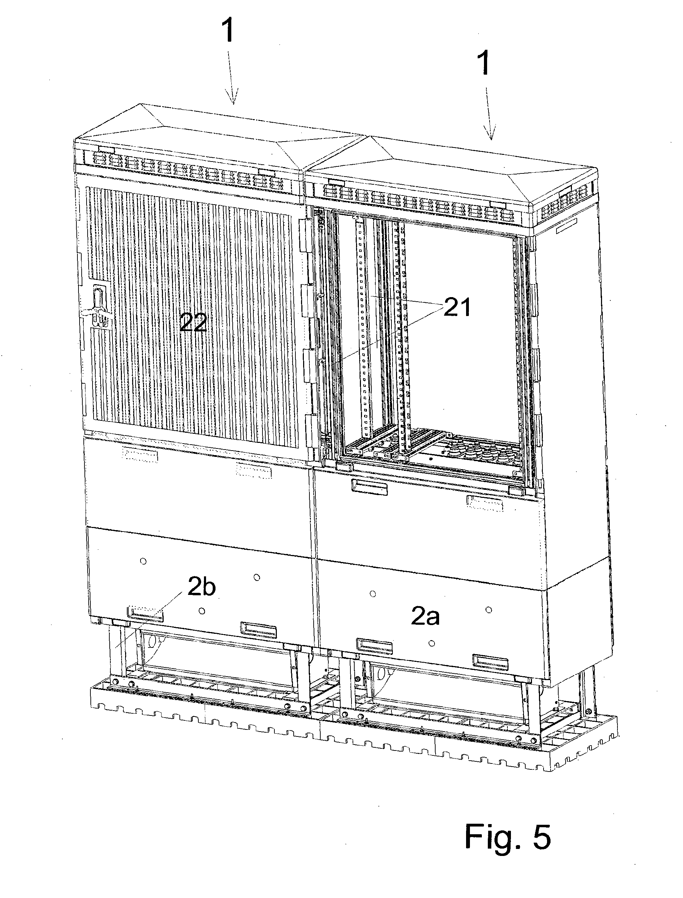

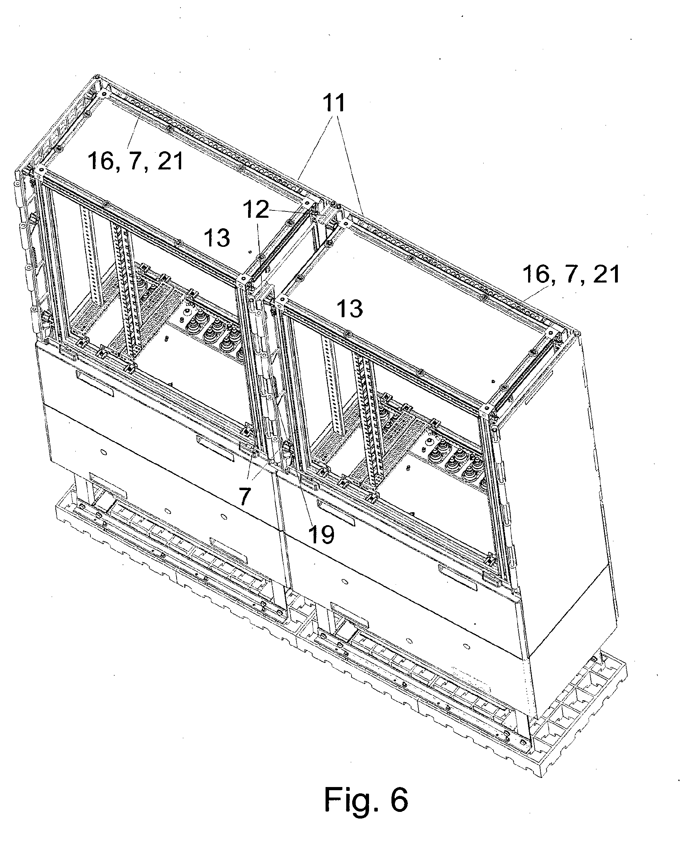

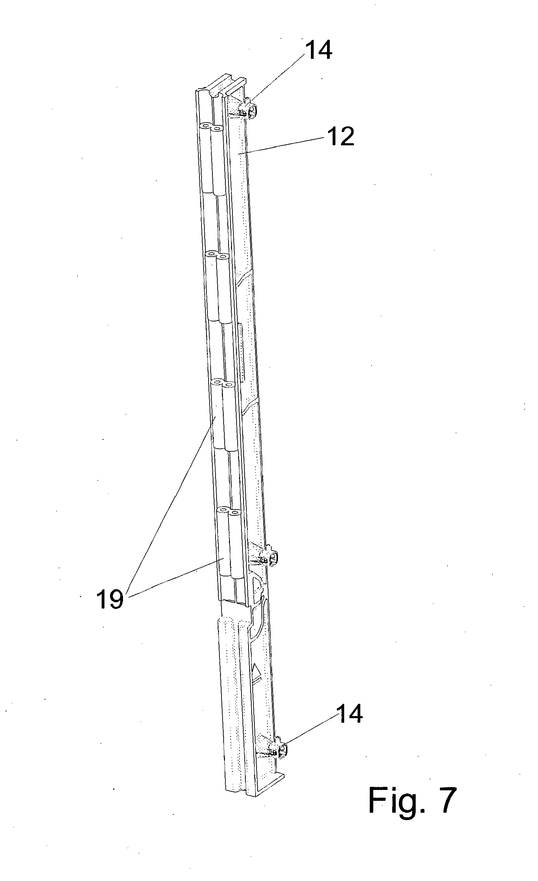

Im vorliegenden Fall ist der Korpusrahmen 16 zweiteilig mit einem unteren Korpusrahmen 16a und einem oberen Korpusrahmen 16b ausgeführt, deren Erstreckung besser in den Figuren 2 und 3 sichtbar wird:
Der untere Korpusrahmen 16a, der ausschließlich in Figur 4 zu sehen ist, umfasst etwa 20% der Höhe des gesamten Korpusrahmens 16 und ist von der Grundfläche her etwas kleiner als der Sockelkasten 2a, so dass die anschließend außen auf dem Korpusrahmen 16 mit Abstand aufgebrachte Beplankung, die den Außenkorpus 22 bildet, vertikal mit dem Sockelkasten 2a darunter fluchtet.

Der untere Korpusrahmen 16a ist wiederum quaderförmig mit horizontal verlaufenden Rahmenprofilen 7 und je nach Größe dazwischen vertikal verlaufenden Querverstrebungen aus solchen Rahmenprofilen 7 gestaltet, während die Seiten aus rechteckig umlaufenden oder auch U-förmigen, nach oben offenen Seitenrahmen 18 bestehen, die aus vorzugsweise gekröpften Blechen bestehen.

Die Kröpfung ist notwendig, damit die vertikalen Schenkel der Seitenrahmen 18 über - in der Aufsicht betrachtet - sowohl in Längsrichtung als auch in Querrichtung des Verteilerschrankes 1 verlaufende Blechflächen verfügen, die einen Winkel bilden, der beispielsweise von der Grundfläche des Verteilerschrankes aus nach schräg außen offen ist.

Diese vertikal stehenden Blechwinkel dienen als Führungen 15, um darin die frei nach unten auslaufenden Enden von vertikalen Rahmenprofilen 7 des oberen Korpusrahmens 16b aufzunehmen und in den beiden Horizontalrichtungen zu halten, da diese Enden der vertikalen Rahmenprofile 7 zueinander über die restlichen horizontal verlaufenden Rahmenprofile des oberen Korpusrahmens 16b in einem solchen Abstand gehalten werden, dass sie genau in die Führungen 15 dieses unteren Korpusrahmens 16a passen.

Der obere Korpusrahmen 16b ist wiederum quaderförmig, in etwa mit der gleichen Grundfläche wie der untere Korpusrahmen 16a, wobei die vertikalen Rahmenprofile des oberen Korpusrahmens 16b soweit über die Unterkante des Quaders nach unten verlängert sind, dass sie bis zum unteren Querschenkel der Seitenrahmen 18 des unteren Korpusrahmen 16a herabreichen oder gar auf diesem aufsitzen und dabei außerhalb des unteren Korpusrahmens nach unten verlaufen.

Nach Verriegeln durch einfache Steckbolzen am unteren Korpusrahmen 16a, eventuell mit einer zusätzlichen Verrastung, kann der obere Korpusrahmen 16b nicht mehr nach oben abgezogen werden, da der gesamte Korpusrahmen 16 dann eine feste Einheit bildet.

Wie die Figuren 1 bis 3 zeigen, ist der obere Korpusrahmen mit Schirmblechen 13 an der Oberseite sowie Rückseite und an den Seitenflächen verkleidet, jedoch bis herab zu dessen unteren Horizontalstreben, die - wie Figur 1 zeigt - im aufgesetzten Zustand knapp oberhalb der oberen Horizontalstrebe des unteren Korpusrahmens 16a zu liegen kommt oder gar auf dieser aufsitzt.

Figur 4 zeigt ferner am besten, dass das Montage-Gestell 6, an dem der größte Teil der späteren elektrischen Einbauten montiert wird, vertikal von der Innenfläche des unteren Korpusrahmens 16a aus nach oben ragt, vorzugsweise nahe dessen Hinterkante, und eine Höhe besitzt, dass es im aufgesetzten Zustand bis nahe des oberen Endes des oberen Korpusrahmens 16b heranreicht, d. h. dessen Innenraum möglichst voll ausnutzt.

Dadurch kann das an diesem Montage-Gestell 6 montierte Innenleben des Verteilerschrankes 1 montiert und in Betrieb bleiben, auch wenn der obere Korpusrahmen - vorzugsweise nach Abnehmen der äußeren Beplankung, wie in Figur 1 bis 3 dargestellt - in seiner Verbindung vom unteren Korpusrahmen 16a gelöst und angehoben oder vollständig nach oben abgezogen wird, um ihn zu reparieren oder vollständig zu ersetzen.

Selbst einzelne Teile des unteren Korpusrahmens 16a können dann ausgetauscht werden, ohne die Einbauten abschalten und demontieren zu müssen, wobei eventuell eine provisorische mechanische Abstützung des restlichen Korpusrahmens16 für die Zeit des Austausches des Einzelteiles hergestellt werden muss.

### BEZUGSZEICHENLISTE

- 1: Verteilerschrank
- 2: Sockel
- 2a: Sockelkasten
- 2b: Sockelfuß
- 3: Korpus
- 4a,b: Tür
- 6: Montage-Gestell
- 7: Rahmenprofil
- 11: Rückwand
- 12: Anreihelement
- 13: Schirmblech
- 14: Außenhalter
- 15: Führung
- 16a: oberer Korpusrahmen
- 16b: unterer Korpusrahmen
- 18: Seitenrahmen
- 19: Hülsenelemente
- 21: Innenkorpus
- 22: Außenkorpus

## Patentansprüche

1. Verteilerschrank (1) mit einem Korpus, umfassend
- einen Innenkorpus (21) in Form eines Korpusrahmens (16) aus Metall und gegebenenfalls einer Beplankung mit Schirmblechen (13), und
- einem Außenkorpus (22), insbesondere in Form einer Abstandsbeplankung des Innenkorpus (21), welche vorzugsweise aus Kunststoff besteht, sowie
- einem Montage-Gestell (6) zum Befestigen der Einbauten, welches am Innenkorpus (21) befestigt,
**dadurch gekennzeichnet, dass**
- der Innenkorpus (21) einen unteren Korpusrahmen (16a) und einen oberen Korpusrahmen (16b) umfasst, die lösbar miteinander verbunden sind und
- das Montagegestell (6) am unteren Korpusrahmen (16a) befestigt ist.

2. Verteilerschrank nach Anspruch 1,
**dadurch gekennzeichnet, dass**
das Montage-Gestell (6) vom unteren Korpusrahmen (16a) aus in den oberen Korpusrahmen (16b) bei fertig montiertem oberen Korpusrahmen (16b) hineinragt.

3. Verteilerschrank nach einem der vorhergehenden Ansprüche,
**dadurch gekennzeichnet, dass**
der oberen Korpusrahmen (16b) unten offen ist und über das mit Einbauten ausgestattete Montage-Gestell (6) überstülpbar ist.

4. Verteilerschrank nach einem der vorhergehenden Ansprüche,
**dadurch gekennzeichnet, dass**
der obere Korpusrahmen (16a) vertikale Streben umfasst, die im übergestülpten Zustand seitlich neben dem unteren Korpusrahmen (16a) verlaufen und mit dessen Vertikalstreben verbunden sind.

5. Verteilerschrank nach einem der vorhergehenden Ansprüche,
**dadurch gekennzeichnet, dass**
beim oberen Korpusrahmen (16a) wenigstens die fordere unterste Horizontalstrebe, insbesondere alle Streben, einzeln demontierbar und austauschbar sind, ohne den Rest des oberen Korpusrahmens (16a) zu demontieren.

6. Verteilerschrank nach einem der vorhergehenden Ansprüche,
**dadurch gekennzeichnet, dass**
die Vertikalstreben des unteren Korpusrahmen (16a) Führungen für die freien Enden der Vertikalstreben des oberen Korpusrahmen (16b) aufweisen, die diese in wenigstens einer horizontalen Querrichtung formschlüssig führen, sowie Verriegelungselemente, die die beiden Rahmen vertikal gegeneinander verriegeln.

7. Verteilerschrank nach einem der vorhergehenden Ansprüche,
**dadurch gekennzeichnet, dass**
beim unteren Korpusrahmen (16a) die vertikalen Rahmenteile durch Führungen (15) für den oberen Korpusrahmen (16a) ergänzt oder ersetzt sind und insbesondere der untere Korpusrahmen (16a) Seitenteile in Form eines U-förmigen Seitenrahmens (18) umfasst.

8. Verteilerschrank nach einem der vorhergehenden Ansprüche,
**dadurch gekennzeichnet, dass**
das Montagegestell (6) nahe der Hinterkante des unteren Korpusrahmens (16a) aus von dessen Innenfläche aufragt und bei übergestülptem oberem Korpusrahmen (16b) bis zu dessen oberen Ende aufragt.

9. Verteilerschrank nach einem der vorhergehenden Ansprüche,
**dadurch gekennzeichnet, dass**
mindestens ein Anreihelement (12) vorhanden ist, mittels dessen der Innenkorpus (21) mit einem weiteren Innenkorpus (21) fest verbunden ist, wobei das Anreihelement (12) sich über die gesamte Höhe des oberen Korpusrahmens (16b) erstreckt.

10. Verfahren zum Reparieren eines im oberen Bereich beschädigten Korpus eines Verteilerschrankes gemäss Anspruch 1, indem
- der Außenkorpus (22) vom Innenkorpus (21) entfernt wird,
- die Verbindung des oberen Korpusrahmens (16b) vom unteren Korpusrahmen (16a) gelöst wird,
- der obere Korpusrahmen (16b) nach oben und/oder hinten über das Montagegestell (6) und die Einbauten abgezogen wird,
- die defekten Teile des oberen Korpusrahmen (16b) ausgetauscht oder dieser komplett ersetzt wird, insbesondere einschließlich der Schirmbleche (13),
- der obere Korpusrahmen (16b) wieder über das Montage-Gestell (6) von oben übergestülpt und mit dem unteren Korpusrahmen (16a) verbunden wird und der Außenkorpus (2) am oberen Korpusrahmen (16b) des Innenkorpus (21) befestigt wird.

11. Verfahren nach Anspruch 10,
**dadurch gekennzeichnet, dass**
vor dem Abnehmen des oberen Korpusrahmens (16b) die vordere unterste Querstrebe des obern Korpusrahmens (16b) demontiert wird und zum Abziehen der obere Korpusrahmen (16a) nur soweit angehoben wird, dass er aus den Führungen des unteren Korpusrahmens (16a) außer Eingriff gerät und dann nach hinten abgezogen wird.

## Claims

1. A distribution cabinet (1) with a body, comprising:
- an inner body (21) configured as a body frame (16) made from metal and optionally a covering with shielding plates (13), and
- an outer body (22) in particular configured as an offset covering of the inner body (21) which is advantageously made from plastic material, and
- a mounting frame (6) for attaching the installations wherein the mounting frame is attached at the inner body (21),
**characterized in that**
- the inner body (21) includes a lower body frame (16a) and an upper body frame (16b) which are connected with one another in a disengageable manner, and.
- the mounting frame (6) is attached at the lower body frame (16a).

2. The distribution cabinet according to claim 1,
**characterized in that**
the mounting frame (6) protrudes from the lower body frame (16a) into the upper body frame (16b) when the upper body frame (16b) is completely mounted.

3. The distribution cabinet according to one of the preceding claims,
**characterized in that**
the upper body frame (16b) is open at a bottom and insertable over the mounting frame (6) that is configured with installations.

4. The distribution cabinet according to one of the preceding claims,
**characterized in that**
the upper body frame (16a) has vertical struts which extend in inserted condition laterally adjacent to the lower body frame (16b) and are connected with its vertical

5. The distribution cabinet according to one of the preceding claims,
**characterized in that**
in the upper body frame (16a) at least the forward lowest horizontal strut, in particular all struts are individually dismountable and replaceable without dismounting the rest of the upper body frame (16a).

6. The distribution cabinet according to one of the preceding claims,
**characterized in that**
the vertical struts of the upper body frame (16a) include supports for the free ends of the vertical struts of the upper body frame (16b), wherein the supports support the
free ends at least in a horizontal transversal direction in a form locking manner, and
locking elements which lock both frames vertically relative to one another.

7. The distribution cabinet according to one of the preceding claims,
**characterized in that**
in the lower body frame (16a) the vertical frame elements are supplemented or replaced by supports (15) for the lower body frame (16a) and in particular the lower
body frame (16a) includes lateral elements configured as a U-shaped side frame (18).

8. The distribution cabinet according to one of the preceding claims, **characterized in that**
the mounting frame (6) protrudes proximal to the rear edge of the upper body frame
(16a) from its inner surface and protrudes to its upper end when the upper body frame (16b) is inserted.

9. The distribution cabinet according to one of the preceding claims,
**characterized in that**
at least one line up element (12) is provided through which the inner body (21) is firmly connected with another inner body (21), wherein the line up element (12) extends over an entire height of the upper body frame (16b).

10. A method for repairing a body of a distribution cabinet according to claim 1 that is damaged in an upper portion, wherein
- an outer body (22) is removed from an inner body (21),
- a connection of an upper body frame (16b) with a lower body frame (16a) is disengaged,
- the upper body frame (16b) is pulled off upward and/or rearward over the mounting frame (6) and the installations,
- the defective components of the upper body frame (16b) are replaced or the upper body frame is replaced in its entirety, in particular including the shielding plates (13)
- the upper body frame (16b) is imposed from above again on the mounting frame (6) and connected with the lower body frame (16a) and the outer body (2) is attached at the upper body frame (16b) of the inner body (21).

11. The method according to claim 10,
**characterized in that**
before removing the upper body frame (16b) the forward lowest transversal strut of the upper body frame (16b) is dismounted and for pull off purposes the upper body frame (16a) is only lifted far enough so that it is moved out of engagement from the
supports of the lower body frame (16a) and thereafter pulled off in rearward direction.

## Revendications

1. Armoire de distribution (1) avec un corps, comprenant :
- un corps intérieur (21) sous la forme d'un châssis de corps (16) en métal et éventuellement d'une garniture avec des tôles de protection (13), et
- un corps extérieur (22), en particulier sous la forme d'une garniture d'espacement du corps intérieur (21), qui est constituée de préférence d'une matière plastique, ainsi que :
- un cadre de montage (6) pour fixer les pièces encastrées, qui est fixé sur le corps intérieur (21),
**caractérisée en ce que**:
- le corps intérieur (21) comprend un châssis de corps inférieur (16a) et un châssis de montage supérieur (16b) qui sont liés l'un à l'autre de manière amovible et
- le cadre de montage (6) est fixé sur le châssis de corps inférieur (16a).

2. Armoire de distribution selon la revendication 1,
**caractérisée en ce que**:
le cadre de montage (6) dépasse du châssis de corps inférieur (16a) dans le châssis de corps supérieur (16b), tandis que le châssis de corps supérieur (16b) est monté prêt à l'emploi.

3. Armoire de distribution selon l'une quelconque des revendications précédentes,
**caractérisée en ce que**:
le châssis de corps supérieur (16b) est ouvert en dessous et peut être emboîté sur le cadre de montage (6) équipé de pièces encastrées.

4. Armoire de distribution selon l'une quelconque des revendications précédentes,
**caractérisée en ce que**:
le châssis de corps supérieur (16a) comprend des entretoises verticales qui, à l'état emboîté, s'étendent latéralement à côté du châssis de corps inférieur (16a) et sont liées par leurs entretoises verticales.

5. Armoire de distribution selon l'une quelconque des revendications précédentes,
**caractérisée en ce que**:
dans le châssis de corps supérieur (16a), au moins l'entretoise horizontale avant la plus basse, en particulier toutes les entretoises, sont individuellement démontables et échangeables sans démonter le restant du châssis de corps supérieur (16a).

6. Armoire de distribution selon l'une quelconque des revendications précédentes,
**caractérisée en ce que**:
les entretoises verticales du châssis de corps supérieur (16b) présentent des guides pour les extrémités libres des entretoises verticales du châssis de corps supérieur (16a), qui guident celles-ci par adaptation de formes dans au moins une direction transversale horizontale, ainsi que des éléments de verrouillage qui verrouillent les deux châssis verticalement l'un vis-à-vis de l'autre.

7. Armoire de distribution selon l'une quelconque des revendications précédentes,
**caractérisée en ce que**:
dans le châssis de corps inférieur (16a), les parties de châssis verticales sont complétées ou remplacées par des guides (15) pour l'autre châssis de corps supérieur (16a) et, en particulier, le châssis de corps inférieur (16a) comprend des parties latérales sous la forme d'un châssis latéral (18) en forme de U.

8. Armoire de distribution selon l'une quelconque des revendications précédentes,
**caractérisée en ce que**:
le cadre de montage (6) fait saillie de sa surface interne à proximité du bord arrière du châssis de corps inférieur (16a) et fait saillie de son extrémité supérieure dans le cas où le châssis de corps supérieur (16b) est emboîté.

9. Armoire de distribution selon l'une quelconque des revendications précédentes,
**caractérisée en ce que**:
il y a au moins un élément de jonction (12) à l'aide duquel le corps intérieur (21) est solidement fixé à un autre corps intérieur (21), dans lequel l'élément de jonction (12) s'étend sur toute la hauteur du châssis de corps supérieur (16b).

10. Procédé de réparation d'un corps d'une armoire de distribution endommagé dans la zone supérieure selon la revendication 1, dans lequel:
- le corps extérieur (22) est retiré du corps intérieur (21),
- la liaison du châssis de corps supérieur (16b) est libérée du châssis de corps inférieur (16a),
- le châssis de corps supérieur (16b) est tiré vers le haut et/ou vers l'arrière par-dessus le cadre de montage (6) et les pièces encastrées,
- les parties défectueuses du châssis de corps supérieur (16b) sont échangées ou celui-ci est remplacé en totalité, en particulier y compris les tôles de protection (13),
- le châssis de corps supérieur (16b) est à nouveau emboîté sur le cadre de montage (6) par le haut et relié au châssis de corps inférieur (16a) et le corps extérieur (2) est fixé au châssis de corps supérieur (16b) du corps intérieur (21).

11. Procédé selon la revendication 10,
**caractérisé en ce que**:
avant le retrait du châssis de corps supérieur (16b), l'entretoise transversale avant la plus basse du châssis de corps supérieur (16b) est démontée et, pour retirer le châssis de corps supérieur (16a), est soulevée assez largement pour qu'elle soit dégagé hors prise des guides du châssis de corps inférieur (16a) et retiré ensuite vers l'arrière.
